# EUROPEAN PATENT APPLICATION

(11) **EP 4 397 632 A1**
(43) Date of publication of application: **10.07.2024**
(21) Application number: 23781174.0
(22) Date of filing: 22.02.2023
(51) Int. Cl.: C02F 9/00, C02F 1/463, C02F 1/66, C02F 1/40, C02F 1/52, C02F 1/02, B01D 21/00, B01D 21/24

(54) **WASTEWATER TREATMENT METHOD AND SYSTEM**

(30) Priority: 29.03.2022 KR 20220038946
(71) Applicant: SK Innovation Co., Ltd., Seoul 03188 (KR)
(72) Inventor: LEE, Jong Su, Daejeon 34124 (KR); ROH, Hye Lin, Daejeon 34124 (KR); SONG, Jae Yang, Daejeon 34124 (KR)
(74) Representative: Frick, Robert
(86) International application number: PCT/KR2023/002548
(87) International publication number: WO 2023/191315

(57) **Abstract**

A method for treating wastewater is proposed, the method including (a) providing wastewater containing microplastics, (b) forming aggregates in the wastewater using iron ions, (c) separating supernatant and the aggregates from the wastewater, (d) subjecting the aggregates to aging, and (e) subjecting the aggregates to heat treatment, and a system that can implement the method is also proposed.

## Description

### Technical Field

The present disclosure relates to a method and system for treating wastewater.

### Background Art

Wastewater is water that cannot be used as it is due to the liquid or solid water contaminants thereof. Wastewater includes domestic sewage, laundry wastewater, industrial wastewater, and agricultural/livestock wastewater in a broad sense.

Wastewater treatment is a process of removing adverse effects on rivers or seas into which wastewater flows by removing contaminants contained in wastewater or removing harmful effects. Wastewater treatment methods include physical treatment such as screening, filtration, precipitation, distillation, evaporation, and magnetic water treatment; and chemical treatment such as neutralization, oxidation-reduction, decomposition, coagulation, adsorption, flotation, extraction, ion exchange, stripping, and combustion/incineration. In addition, there are aerobic biological treatment such as activated sludge method, trickling filter method, oxidation pond method, rotating disk method, and catalytic oxidation method, and anaerobic biological treatment such as digestion method (methane fermentation method) and septic tank.

Plastics are used for many purposes because they are lightweight, durable, and low-cost. However, plastics that flow into the drainage system decompose to form microplastics. Microplastics are defined as plastic particles less than 5 mm in size.

Hydrophobic plastics, which are hydrocarbon-based polymer compounds, have high adsorption properties for persistent organic contaminants with strong hydrophobicity. These adsorption properties increase with an increasing surface area due to a decrease in size. In addition, chemical substances such as plasticizers, flame retardants, and antioxidants are used in order to enhance ease of processing and functionality during the plastic manufacturing process. In the process of decomposing or discarding plastics, these chemicals may be released to the environment and act as toxic substances to marine organisms.

Microplastics are so small that they are not filtered out in sewage treatment facilities, and they are released into oceans. Microplastics containing adsorbable contaminants are often mistaken for food and ingested by marine organisms, causing disturbance of the marine ecosystem. Ingestion of microplastics can have toxic effects on marine organisms such as physical injury, changes in food intake and behavior, and reduced growth and reproductive abilities. In addition, all living lives can be exposed to the risk of microplastics due to the food chain. Today's imperative is not only to minimize the generation of microplastics, but also to reduce the release of generated microplastics into rivers and oceans.

Meanwhile, iron oxide is widely used in many industrial fields. Iron oxide is used, for example, as a color pigment in ceramics, building materials, plastics, surface coatings, and paper. It also serves as a base for various catalysts or support materials, and absorbs or adsorbs contaminants. Magnetic iron oxide is used as magnetic memory media, toners, and ferrofluids, or in the biomedical field, such as contrast agents for magnetic resonance imaging. In these many applications, the particle size of iron oxide particles plays an important role. Thus, the formation of particles with a controlled particle size is required. However, it is challenging to produce finely divided iron oxide having a limited particle size on an industrial scale.

### Disclosure

### Technical Problem

An objective of the present disclosure is to provide a method and system for treating wastewater.

### Technical Solution

According to a first aspect of the present disclosure, there is provided a method for treating wastewater, the method including: (a) providing wastewater containing microplastics; (b) forming aggregates in the wastewater using iron ions; (c) separating supernatant and the aggregates from the wastewater; (d) subjecting the aggregates to aging; and (e) subjecting the aggregates to heat treatment.

According to an embodiment, step (b) may include: placing electrodes containing iron in the wastewater; and supplying electricity to the electrodes.

According to an embodiment, a pH of the wastewater after step (b) may be greater than 8.5.

According to an embodiment, the method may further include subjecting the separated supernatant to further purification.

According to an embodiment, step (e) may be performed at a temperature of 400 to 1000°C.

According to an embodiment, the method may further include recovering iron oxide from the aggregates subjected to heat treatment.

According to an embodiment, the recovered iron oxide may include Fe3O4, γ-Fe2O3, α-Fe2O3, or a combination thereof.

According to a second aspect of the present disclosure, there is provided a system for treating wastewater, the system including: a coagulation unit forming aggregates in introduced wastewater using iron ions; a separation unit separating the wastewater into aggregates and supernatant; an aging unit aging the aggregates; and a heat treatment unit heat-treating the aggregates.

According to an embodiment, the coagulation unit may be an electro-coagulation device including an anode and a cathode, and the anode may contain iron.

### Advantageous Effects

The present disclosure provides a method and system that can obtain pure iron oxide nanoparticles while remove microplastics from wastewater containing microplastics.

### Description of Drawings

FIG. 1 is a schematic flow diagram illustrating a method for treating wastewater according to an embodiment.
FIG. 2 is a graph illustrating an XRD analysis result according to Experimental Example 1.
FIG. 3 is an image illustrating a TEM analysis result according to Experimental Example 1.
FIG. 4 is a graph illustrating an XRD analysis result according to Experimental Example 2.

### Best Mode

The objectives, advantages, and features of the present disclosure will be more clearly understood from the following detailed description taken in conjunction with the accompanying drawings. However, the present disclosure is not limited to the below-described embodiments. Further, it is to be noted that, when the functions of conventional elements and the detailed description of elements related with the present disclosure may make the gist of the present disclosure unclear, a detailed description of those elements will be omitted.

### Method for treating wastewater

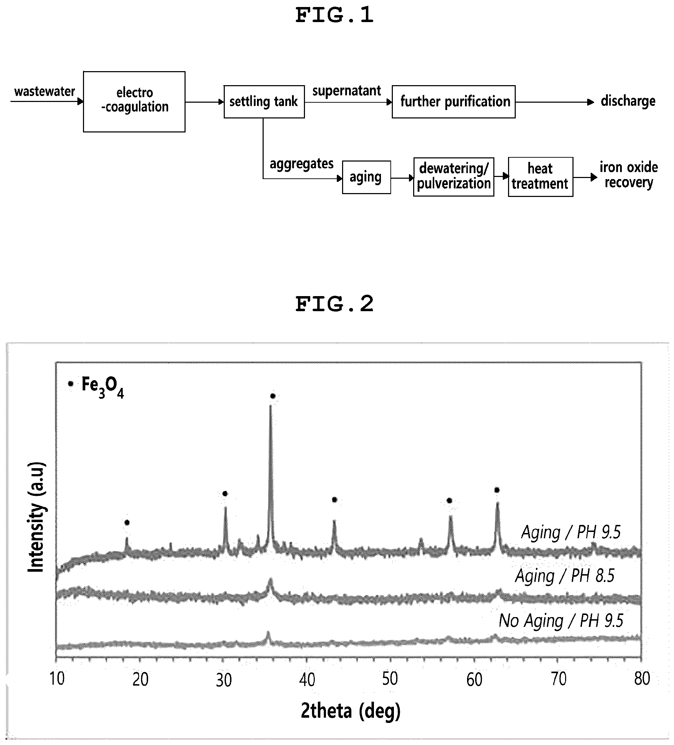

The present disclosure provides a method for treating wastewater. FIG. 1 is a schematic flow diagram illustrating a method for treating wastewater according to an embodiment of the present disclosure. Hereinafter, the method for treating wastewater according to the present disclosure will be described with reference to FIG. 1.

In the present disclosure, wastewater to be treated may include microplastics. The microplastics may be removed from wastewater using the method for treating wastewater according to the present disclosure. By using the method for treating wastewater according to the present disclosure, not only the microplastics but also other contaminants such as organic matter that may exist in wastewater can be removed from wastewater.

The method according to the present disclosure may include forming aggregates in provided wastewater using iron ions. The aggregates include microplastics in the wastewater.

Electro-coagulation may be used in the present disclosure to form the aggregates. Electro-coagulation is a technique to destabilize suspended particles, emulsified particles, insoluble particles, and the like of contaminants by supplying electricity into the wastewater. When electrodes are placed in the wastewater and electricity is supplied, a soluble electrode at the anode is oxidized by an electrochemical reaction to generate metal cations. The metal cations are convected and diffused by an electric field and a concentration gradient, and are neutralized by electrically bonding with contaminants, forming aggregates.

This electro-coagulation method has the advantage that a device is simple and easy to operate. In addition, since the resulting sludge is composed of metal hydroxide, it is easy to settle, is easy to dewater, and is produced in small amount. In addition, flocs formed by electro-coagulation tend to be much larger in size, contain a lower water content, are acid-resistant, and are more stable than flocs formed by chemical coagulation. In addition, since water treated using electro-coagulation has a lower total dissolved solid (TDS) concentration than water treated using chemical coagulation, the treatment cost for reuse is reduced. In addition, unlike chemical coagulation that requires a coagulant, since electro-coagulation does not use chemicals, there is no need to neutralize chemicals and no secondary treatment is required.

The method for treating wastewater according to the present disclosure includes: placing electrodes in wastewater; and supplying electricity to the electrodes to supply iron ions into the wastewater, that is, to form aggregates in the wastewater. The electrodes include an anode and a cathode. As the anode, a soluble electrode is used. In the present disclosure, the anode contains iron. When the electricity is supplied to the electrodes, iron in the anode is oxidized, making it possible to supply iron ions into the wastewater. The anode may be an electrode made of iron or coated with iron.

When an iron electrode is used as the anode, an iron, aluminum, stainless electrode, or the like may be used as the cathode. However, the electrode that can be used as the cathode is not limited thereto, and any known insoluble electrode may be used as the cathode as long as it does not hinder the achievement of the objective of the present disclosure.

This electro-coagulation may be performed at room temperature. The time for supplying the electricity to the electrodes may vary depending on the content of metal contained in the electrodes, the amount of wastewater, the pH of wastewater, and the like. For example, supplying the electricity to the electrodes may be performed for about 10 minutes to 3 hours. Specifically, the above process may be performed for about 20 minutes to 2 hours. When the above process is performed for less than 10 minutes, metal in the anode is not sufficiently oxidized, so aggregates are not sufficiently formed, with the result that microplastics may not be sufficiently removed. On the other hand, when the above process is performed for more than 3 hours, metal in the anode is oxidized too much, so the metal electrode used as the anode may be replaced too frequently.

In addition, supplying the electricity to the electrodes may be performed simultaneously with agitating the wastewater. Agitation during the electro-coagulation reaction makes the flow in a reactor smooth, increasing the possibility of contact between metal cations and hydroxyl groups, thereby increasing the coagulation efficiency and consequently enhancing the microplastic removal rate.

In an embodiment of the present disclosure, supplying the electricity to the electrodes may be performed until the pH of the wastewater becomes greater than about 8.5. Specifically, the above process may be performed until the pH of the wastewater becomes equal to or greater than about 9, more specifically, equal to or greater than about 9.5.

Thus, the pH of the wastewater in which aggregates are formed may be greater than about 8.5, specifically, equal to or greater than about 9, and more specifically, equal to or greater than about 9.5. When the pH of the wastewater is equal to or less than 8.5, magnetite (Fe₃O₄) may not be produced in a subsequent process. In addition, from the viewpoint of enhancing the conversion rate to magnetite, the pH of the wastewater may be equal to or greater than 9.5.

When a predetermined time elapses after supplying the iron ions into the wastewater, aggregates are formed. The iron ions supplied into the wastewater react with water and oxygen, and may exist mostly in the form of iron hydroxide and/or iron oxide. Thus, in some embodiments of the present disclosure, aggregates may contain iron hydroxide and microplastics. Also, in some of these embodiments, the aggregates may further contain a small amount of iron oxide. Here, the small amount of iron oxide may be understood as an amount of iron oxide less than an amount of iron hydroxide.

When the iron electrode is used as the anode, the electricity is supplied to the iron electrode to supply iron cations into the wastewater. The iron cations react with water and oxygen, and may exist in the wastewater mostly in the form of iron hydroxide, such as Fe(OH)₂. In addition, the iron cations may exist in the wastewater in small amount in the form of iron oxide, such as FeO, Fe₂O₃, and Fe₃O₄.

The method for treating wastewater according to the present disclosure includes separating supernatant and the aggregates from the wastewater. In an embodiment of the present disclosure, the separated aggregates may contain sludge and suspended solids. Thus, the above process may be performed by separating the sludge and suspended solids in the wastewater from the supernatant.

The wastewater in which the aggregates are formed may left for a period of time with agitation stopped. In an embodiment of the present disclosure, the wastewater may be left for about 3 to 48 hours. Specifically, the wastewater may be left for about 5 to 36 hours, more specifically, about 6 to 24 hours, and even more specifically, about 10 to 18 hours. When the wastewater is left for less than the above time period, a layer between the sludge and the supernatant is not sufficiently formed, with the result that the separation efficiency may be reduced. On the other hand, when the wastewater is left for greater than the above time period, the amount of wastewater treated may be reduced with an increase in the total process time.

The sludge and suspended solids thus produced may be separated from the supernatant by a known method. The sludge and suspended solids may be not handled separately, and may be mixed and introduced into a subsequent process.

The method for treating wastewater according to the present disclosure may further include subjecting the supernatant separated from the aggregates to further purification. The supernatant separated by the difference in specific gravity from the aggregates may contain a small amount of contaminants such as residual organic matter and ions. These contaminants may be removed by further purification before the supernatant is discharged into rivers and/or oceans. A further purification method is not particularly limited as long as it can remove remaining contaminants, and if necessary, secondary electro-coagulation may be performed. In addition, the further purification may include neutralizing the pH of the supernatant.

In an embodiment of the present disclosure, the supernatant separated from the aggregates may have a microplastic removal rate of equal to or greater than about 90%, specifically, equal to or greater than about 95%, and more specifically, equal to or greater than about 99%, before the further purification. The removal rate is calculated by dividing the difference between the number of microplastics in the initially supplied wastewater containing microplastics and the number of microplastics in the supernatant by the number of microplastics in the wastewater. In addition, the number of microplastics may mean the number of microplastics per 1L of water. In addition, the number of microplastics may be measured, for example, through Image FT-IR analysis, but is not particularly limited thereto. Here, the particle size of the microplastics measured is equal to or greater than 20 µm. The method for treating wastewater according to the present disclosure includes subjecting the separated aggregates to aging. Through the aging process, at least a part of iron hydroxide (Fe(OH)₂) is converted into magnetite (Fe₃O₄). In an embodiment of the present disclosure, the aging process may be performed at room temperature for equal to or greater than about 12 hours. Specifically, the process may be performed for equal to or greater than 18 hours, more specifically, for equal to or greater 24 hours. For example, the aging process may be performed for about 24 to 48 hours, about 24 to 36 hours, or about 24 to 30 hours. When the aging time is less than 12 hours, magnetite (Fe₃O₄) may not be produced. From the viewpoint of enhancing the conversion rate to magnetite, the aging time may be equal to or greater than about 24 hours.

The pH of the aggregates upon aging may be greater than about 8.5, specifically, equal to or greater than about 9, and more specifically, equal to or greater than about 9.5. When the pH of the wastewater is equal or less than 8.5, magnetite (Fe₃O₄) may not be produced in the aging process. From the viewpoint of enhancing the conversion rate to magnetite, the pH of the aggregates may be equal to or greater than about 9.5.

In order to prevent oxidation of materials in the aggregates due to contact with outside air, aging of the aggregates may be performed in a sealed state. The aggregates may be sealed by a known means, and is not particularly limited as long as it does not hinder the achievement of the objective of the present disclosure.

The method for treating wastewater according to the present disclosure may further include dewatering and pulverizing the aggregates after aging. The aggregates may be dewatered and pulverized into a powder form. In the present disclosure, a dewatering method is not particularly limited, and a known sludge dewatering method may be used. For example, methods such as centrifugal separation, pressure dewatering, drying, evaporation, and heating may be used. In the present disclosure, a pulverizing means is not particularly limited either. By powderizing the aggregates through dewatering and pulverization, the efficiency in a subsequent heat treatment process can be increased.

The method for treating wastewater according to the present disclosure includes subjecting the pulverized aggregates to heat treatment. The pulverized aggregates may contain microplastics, iron hydroxide, and iron oxide. In addition, the aggregates may further contain other pollutants such as organic matter.

Through the heat treatment process, microplastics and other pollutants may be burned and removed from the aggregates. In addition, through the heat treatment process, iron hydroxide in the aggregates may be converted into iron oxide. In addition, in some cases, the iron oxide may change its crystal structure.

In some embodiments of the present disclosure, the heat treatment process may be performed at about 400 to 1000°C for about 1 to 6 hours. Through the heat treatment process, iron oxide nanoparticles including magnetite (Fe₃O₄), maghemite (γ-Fe₂O₃), or hematite (α-Fe₂O₃) nanoparticles may be obtained. Specifically, magnetite (Fe₃O₄), maghemite (γ-Fe₂O₃), or hematite (α-Fe₂O₃) nanoparticles may be obtained through the heat treatment process.

By controlling the temperature of the heat treatment process, iron oxide having a certain crystal structure can be predominantly produced. Thus, the heat treatment temperature may vary even within the above range depending on the crystal structure of iron oxide to be finally obtained. For example, in an embodiment, the heat treatment temperature may be equal to or greater than about 400°C and less than about 700°C. In another embodiment, the heat treatment temperature may be equal to or greater than about 700°C and equal to or less than about 1000°C. When the heat treatment temperature is less than about 400°C, microplastics in the aggregates may not be completely removed.

On the other hand, when the heat treatment temperature is equal to or greater than about 400°C and less than about 700°C, maghemite (γ-Fe₂O₃) nanoparticles may be predominantly produced. On the other hand, when the heat treatment temperature is equal to or greater than about 700°C and equal to or less than about 1000°C, hematite (α-Fe₂O₃) nanoparticles may be predominantly produced. Here, the expression `predominantly produced' means that at least about 90% of the total iron oxide can be produced with a certain crystal structure.

In an embodiment of the present disclosure, the heat treatment process may be performed under an air atmosphere or a nitrogen atmosphere.

The method for treating wastewater according to the present disclosure may further include recovering iron oxide from the aggregates subjected to heat treatment. Through the above-described heat treatment process, microplastics are removed, and high-purity iron oxide nanoparticles can be obtained. The recovered iron oxide may include magnetite (Fe₃O₄), maghemite (γ-Fe₂O₃), hematite (α-Fe₂O₃), or a combination thereof. Specifically, the recovered iron oxide may be magnetite (Fe₃O₄), maghemite (γ-Fe₂O₃), hematite (α-Fe₂O₃), or a combination thereof. In an embodiment of the present disclosure, the size of the iron oxide nanoparticles may be about 1 to 200 nm, specifically, about 10 to 100 nm.

The iron oxide nanoparticles obtained through the method according to the present disclosure can be utilized in various fields.

### System for treating wastewater

The present disclosure provides a system for treating wastewater. The system is a system that can implement the above-described method for treating wastewater. In the following, a description of contents overlapping with those of the above description in relation to the method for treating wastewater may be omitted. In addition, unless otherwise defined, the technical features related to the above-described method for treating wastewater may be equally applied to the system according to the present disclosure.

The system includes a coagulation unit; a separation unit; an aging unit; and a heat treatment unit. In the present disclosure, the term 'unit' does not mean only a single device, and may be used as a term including both a single device and a plurality of devices.

The coagulation unit uses iron ions to form aggregates in wastewater flowing into the coagulation unit. The wastewater is wastewater containing microplastics. The aggregates contain microplastics and iron hydroxide or iron oxide produced from iron ions. In an embodiment of the present disclosure, the coagulation unit may be an electro-coagulation device. The electro-coagulation device includes electrodes. The electrodes include an anode and a cathode. Specifically, the electro-coagulation device may include electrodes located in an interior thereof into which the wastewater flow. In some embodiments of the present disclosure, the coagulation unit may further include an agitating device. The coagulation unit includes an inlet through which the wastewater flows in and an outlet through which the wastewater containing the aggregates flows out.

The separation unit separates the wastewater into the aggregates and supernatant. The aggregates contain sludge and suspended solids. A known means for separating aggregates from supernatant may be included in the separation unit. For example, the separation unit may include a settling tank. In addition, in order to remove the suspended solids, the separation unit may include, for example, a skimmer. The separation unit includes an inlet in communication with the outlet of the coagulation unit. In addition, the separation unit includes a supernatant outlet through which the supernatant flows out and an aggregate outlet through which the aggregates flow out.

In an embodiment of the present disclosure, the system may include a further purification unit. The further purification unit includes an inlet in communication with the supernatant outlet of the separation unit, and an outlet. The further purification unit further purifies the supernatant separated from the aggregates in the separation unit. A known means for further purifying the supernatant may be included in the further purification unit. The further purified supernatant flowing out through the outlet of the further purification unit may be discharged into rivers or oceans, or recycled as industrial water or the like.

The water treatment system according to the present disclosure may further include a dewatering unit and a pulverization unit. The dewatering unit removes water from the aggregates separated from the supernatant. The dewatering unit includes an inlet in communication with the aggregate outlet of the separation unit, and an outlet through which the dewatered aggregates flow out.

The pulverization unit pulverizes the aggregates. The pulverization unit includes an inlet in communication with the outlet of the dewatering unit, and an outlet through which the pulverized aggregates flow out.

In the present disclosure, the dewatering unit and the pulverization unit are indicated as separate units to distinguish them functionally. However, in an embodiment of the present disclosure, the dewatering unit and the pulverization unit may be a single facility, and in this case, the outlet of the dewatering unit and the inlet of the pulverization unit may not be required.

The heat treatment unit heat-treats the pulverized aggregates. The heat treatment unit includes an aggregate inlet in communication with the outlet of the pulverization unit, and an outlet through which the heat-treated aggregates flow out. In the heat treatment unit, microplastics in the aggregates are removed and iron oxide is produced. In an embodiment of the present disclosure, the heat treatment unit may further include a gas inlet. Through the gas inlet, the atmosphere in the unit is controlled to a desired gas atmosphere.

Hereinafter, examples will be given to aid in understanding the present disclosure. However, the following examples are provided to more easily understand the present disclosure, and the present disclosure is not limited thereto.

### Example

A laboratory-scale experiment was conducted on the method for treating wastewater as follows.

### Experimental Example 1.

### (1) Sludge production

Wastewater with a suspended solid (SS) concentration of about 39 mg/L from a waste plastic recycling process was supplied to a 500 mL reactor. Electrodes were immersed in the reactor. An iron electrode was used as an anode and a stainless electrode was used as a cathode. An electro-coagulation reaction was performed for 1 hour by supplying a current of about 6 mA/cm² to the electrodes. The reactor was agitated at 200 RPM. After stopping agitation, the mixture was left for about 24 hours to produce sludge, and supernatant and the sludge were separated. The SS concentration of the separated supernatant was found to be about 7.27 mg/L, and the pH of the supernatant was found to be 9.6.

### (2) XRD and TEM analysis

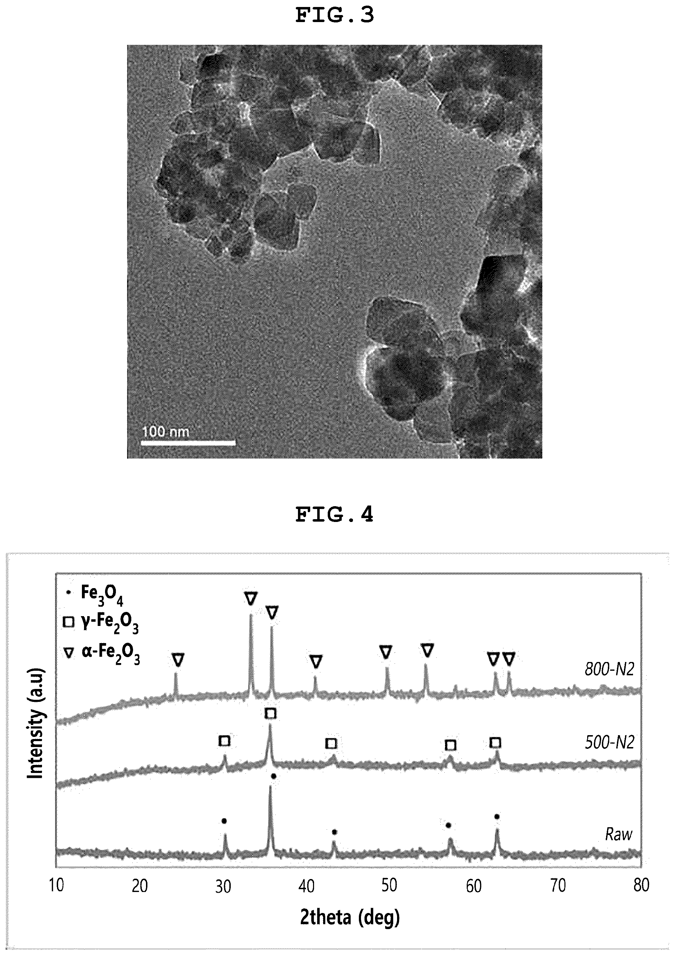

1) The produced sludge was put in a bottle and aged for about 24 hours by closing a bottle cap. The sludge was then dried in an oven at 80°C to remove residual water. Thereafter, XRD and TEM analysis was performed on a part of the sludge, and the results are illustrated in FIGS. 2 and 3 (Aging/pH 9.5 (here, pH 9.5 means that the pH of the sludge is equal to or greater than 9.5).
2) XRD analysis was performed after removing residual water from the sludge produced in the above-described manner without aging the sludge, and the results are also illustrated in FIG. 2 (No Aging/pH 9.5).
3) In addition, electro-coagulation was performed using the same wastewater until the pH of the wastewater reaches about 8.5, and then the obtained sludge was aged for about 24 hours. The sludge was then dried to remove residual water. XRD analysis was performed on the obtained sludge, and the results are illustrated in FIG. 2 (Aging/pH 8.5).

Referring to FIGS. 2 and 3, it can be confirmed that magnetite (Fe₃O₄) nanoparticles are produced in the sludge only when the sludge satisfies an aging time of equal to or greater than 24 hours and a pH of equal to or greater than 9.5.

### (3) Analysis of microplastic removal rate

The number of microplastics per 1L of water in each of the wastewater of the waste plastic recycling process used in `(1) sludge production' and the separated supernatant was measured. An Image FT-IR device was used for the number measurement, and the measurement results are illustrated in Table 1 below.

**Table 1**

| | Wastewater | Supernatant |
|---|---|---|
| Number of microplastics/L (particle size of equal to or greater than 20 µm) | 131800 | 1333 |
| Microplastic removal rate, % | - | 99 |

As illustrated in Table 1, it can be seen that a microplastic removal rate of approximately 99% can be achieved without further purification of the separated supernatant.

### Experimental Example 2.

0.2 g of the sludge obtained in the same manner as in (2)-1) of Experimental Example 1 was placed in a crucible and loaded into a furnace. After purging the interior of the furnace with N₂, the sludge was heat-treated at about 500°C and at about 800°C for about 4 hours. Then, XRD analysis was performed on the resulting product. The results are illustrated in FIG. 3 (500, 800-sludge). From the XRD analysis results, it was confirmed that magnetic maghemite (γ-Fe₂O₃) is produced by heat treatment at about 500°C and nonmagnetic hematite (α-Fe₂O₃) is produced by heat treatment at about 800°C. These are believed to result from the conversion of iron hydroxide and magnetite in the sludge, respectively.

Simple modifications or changes of the present disclosure belong to the scope of the present disclosure, and the detailed scope of the present disclosure will be more clearly understood by the accompanying claims.

## Claims

1. A method for treating wastewater, the method comprising:
(a) providing wastewater containing microplastics;
(b) forming aggregates in the wastewater using iron ions;
(c) separating supernatant and the aggregates from the wastewater;
(d) subjecting the aggregates to aging; and
(e) subjecting the aggregates to heat treatment.

2. The method of claim 1, wherein step (b) comprises:
placing electrodes containing iron in the wastewater; and
supplying electricity to the electrodes.

3. The method of claim 1, wherein a pH of the wastewater after step (b) is greater than 8.5.

4. The method of claim 1, further comprising
subjecting the separated supernatant to further purification.

5. The method of claim 1, wherein step (e) is performed at a temperature of 400 to 1000°C.

6. The method of claim 1, further comprising
recovering iron oxide from the aggregates subjected to heat treatment.

7. The method of claim 6, wherein the recovered iron oxide comprises Fe₃O₄, γ-Fe₂O₃, α-Fe₂O₃, or a combination thereof.

8. A system for treating wastewater, the system comprising:
a coagulation unit forming aggregates in introduced wastewater using iron ions;
a separation unit separating the wastewater into aggregates and supernatant;
an aging unit aging the aggregates; and
a heat treatment unit heat-treating the aggregates.

9. The system of claim 8, wherein the coagulation unit is an electro-coagulation device comprising an anode and a cathode, and the anode contains iron.
